# EUROPEAN PATENT APPLICATION

(11) **EP 3 855 306 A1**
(43) Date of publication of application: **28.07.2021**
(21) Application number: 19876743.6
(22) Date of filing: 30.01.2019
(51) Int. Cl.: G06F 8/65

(54) **ONLINE UPGRADE CONTROL METHOD FOR HOME APPLIANCE SYSTEM, AND HOME APPLIANCE SYSTEM**

(30) Priority: 26.10.2018 CN 201811256011
(71) Applicant: GD Midea Air-Conditioning Equipment Co., Ltd., Foshan, Guangdong 528311 (CN)
(72) Inventor: YE, Xiongbin, Foshan, Guangdong 528311 (CN)
(74) Representative: Lam, Alvin
(86) International application number: PCT/CN2019/073959
(87) International publication number: WO 2020/082641

(57) **Abstract**

An online upgrade control method for a home appliance system, and a home appliance system (10). The home appliance system (10) comprising multiple functional components (12), the home appliance system (10) having connected thereto a memory (14), and the online upgrade control method comprising: querying a server (20) for all functional components (12) so as to determine whether there is an applicable software update; if so, downloading the applicable software update for the functional component (12) requiring updating to the memory (14), and backing up the original software of the functional component (12) requiring updating to the memory (14); synthesizing version numbers of all applicable software into a single update version number.

## Description

### CROSS-REFERENCE TO RELATED APPLICATIONS

This application claims a priority to Chinese Patent Application Serial No. 201811256011.0, filed with the National Intellectual Property Administration of PRC on October 26, 2018, the entire content of which is incorporated herein by reference.

### FIELD

The present disclosure relates to the field of home appliance, particularly relates to an online upgrade control method for a home appliance system and a home appliance system.

### BACKGROUND

At present, under the trend of Internet of Everything, a home appliance can be connected to the Internet through a communicating module, which has become a standard feature of a new generation of home appliance on the market. By connecting to a network, a terminal device can automatically download and update a software version through the Internet, in addition to providing a user with services related to personal preferences, cloud storage and data analysis.

For example, as a complex home appliance system, an air conditioner can be divided into multiple independent functional modules, each of which has an independent version number of the software. Because of complexity of the software of the air conditioning system, there are few air conditioners on market that support an online upgrade. Even for an air conditioner that supports the online upgrade, it is only possible to achieve version maintenance and upgrade for a single functional module, but impossible to maintain and upgrade individual software versions of the multiple functional modules at the same time, thus resulting in low efficiency and complicated online upgrade procedures.

### SUMMARY

The present disclosure provides in embodiments an online upgrade control method for a home appliance system and a home appliance system.

Embodiments of the present disclosure provide an online upgrade control method for a home appliance system, wherein the home appliance system may include a plurality of functional components, the home appliance system is connected with a memory, and the online upgrade control method may include:
querying a server about all functional components to determine whether a software update is available;
if yes, downloading the available software update of the functional component that needs to be updated to the memory, and backing up original software of the functional component that needs to be updated to the memory; and
combining all available software version numbers into a single updated version number.

In the online upgrade control method in embodiments of the present disclosure, all available software version numbers are combined into a single updated version number, such that it is possible to solve the coupling problem of related software and reduce operation complexity for a user as it is unnecessary to care about how many functional component updates are upgraded.

The home appliance system in embodiments of the present disclosure may include a plurality of functional components, a querying module, a downloading module and a combining module, the home appliance system is connected with a memory; the querying module is configured to query a server about all functional components to determine whether a software update is available;
if a software update is available, the downloading module is configured to download the available software update of the functional component that needs to be updated to the memory, and back up original software of the functional component that needs to be updated to the memory;
the combining module is configured to combine all available software version numbers into a single updated version number.

The home appliance system in embodiments of the present disclosure combines all available software version numbers into a single updated version number, such that it is possible to solve the coupling problem of related software and reduce operation complexity for a user as it is unnecessary to care about how many functional component updates are upgraded.

The home appliance system in embodiments of the present disclosure may include a plurality of functional components, a first memory, a processor, and a second memory having stored therein one or more programs that is(are) configure to, when executed by the processor, perform an online upgrade control method as described in the above embodiments.

The home appliance system in embodiments of the present disclosure combines all available software version numbers into a single updated version number, such that it is possible to solve the coupling problem of related software and reduce operation complexity for a user as it is unnecessary to care about how many functional component updates are upgraded.

The additional aspects and advantages of the embodiments of the present disclosure will be partly given in the following description, and part of them will become obvious from the following description, or be understood through the practice of the embodiments of the present disclosure.

### BRIEF DESCRIPTION OF THE DRAWINGS

The above and/or additional aspects and advantages of the present disclosure will become obvious and easy to understand from the description of the embodiments in conjunction with the following drawings
Fig. 1 is a flow chart showing an online upgrade control method according to an embodiment of the present disclosure.
Fig. 2 is a schematic diagram showing modules of a home appliance system according to an embodiment of the present disclosure.
Fig. 3 is a schematic diagram showing a hardware environment of an online upgrade control method according to an embodiment of the present disclosure.
Fig. 4 is a schematic diagram showing another hardware environment of an online upgrade control method according to an embodiment of the present disclosure.
Fig. 5 is another flow chart showing an online upgrade control method according to an embodiment of the present disclosure.
Fig. 6 is another schematic diagram showing modules of a home appliance system according to an embodiment of the present disclosure.
Fig. 7 is still another flow chart showing an online upgrade control method according to an embodiment of the present disclosure.
Fig. 8 is still another schematic diagram showing modules of a home appliance system according to an embodiment of the present disclosure.
Fig. 9 is still another flow chart showing an online upgrade control method according to an embodiment of the present disclosure.
Fig. 10 is still another schematic diagram showing modules of a home appliance system according to an embodiment of the present disclosure.
Fig. 11 is still another flow chart showing an online upgrade control method according to an embodiment of the present disclosure.
Fig. 12 is still another schematic diagram showing modules of a home appliance system according to an embodiment of the present disclosure.
Fig. 13 is still another flow chart showing an online upgrade control method according to an embodiment of the present disclosure.
Fig. 14 is still another flow chart showing an online upgrade control method according to an embodiment of the present disclosure.
Fig. 15 is still another schematic diagram showing modules of a home appliance system according to an embodiment of the present disclosure.

### Description of reference numerals:

home appliance system 10, functional component 12, first-level functional component 122, second-level functional component 124, memory 14, communicating module 16, module memory 162, touch display screen 110, sever 20, terminal 30, querying module 210, processing module 220, combining module 230, receiving module 240, acquiring module 250, version rollback module 260, judging module 270, receiving unit 280, comparing unit 290, verifying module 310, downloading module 320, first memory 410, processor 430, second memory 420.

### DETAILED DESCRIPTION

Reference will be made in detail to embodiments of the present disclosure. The same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the description of the present disclosure, it should be appreciated that the terms such as "first" and "second" are used herein for purposes of description and are not intended to indicate or imply relative importance or significance or impliedly indicate quantity of the technical feature referred to. Thus, the feature defined with "first" and "second" may comprise one or more these features. In the description of the present disclosure, "a plurality of" means two or more than two this features, unless specified otherwise.

In the description of the present disclosure, it should be appreciated that the terms "mounted", "connected", and "coupled" are used broadly unless specified or limited otherwise. For example, it may be fixed connections, detachable connections, or integral connections; may be mechanical connections, may also be electrical connections or mutual communication; may also be direct connections or indirect connections via an intervening structure; may also be inner communications of two elements or mutual interaction between two elements, which can be understood by those skilled in the art according to specific situations in the context of the description of the present disclosure.

Various embodiments and examples are provided in the following description to implement different structures of the present disclosure. In order to simplify the present disclosure, certain elements and settings will be described. However, these elements and settings are only by way of example and are not intended to limit the present disclosure. In addition, reference numerals and/or letters may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

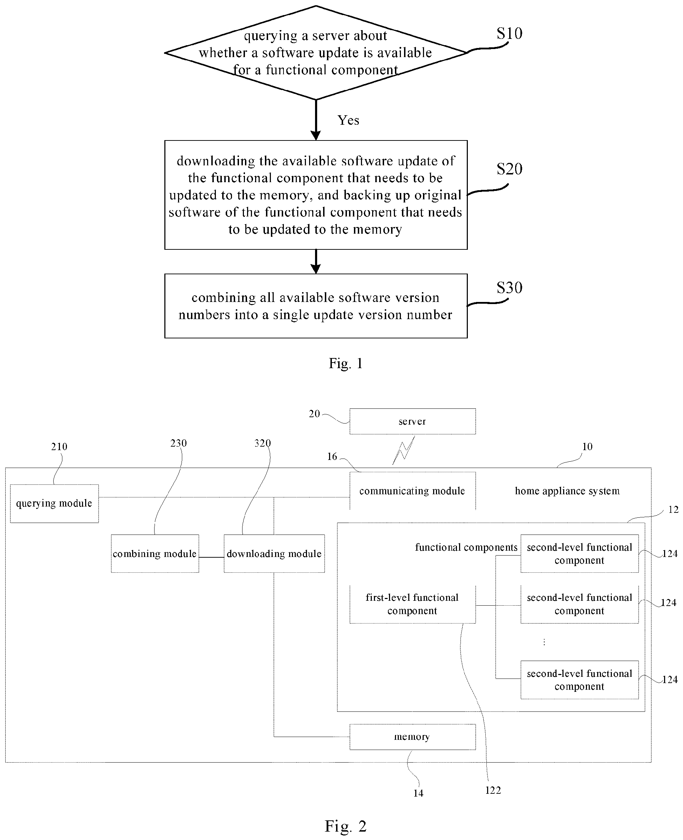

With reference to Fig. 1 to Fig. 4, an online upgrade control method of a home appliance system 10 in embodiments of the present disclosure may be implemented by the home appliance system 10 in embodiments of the present disclosure. The home appliance system 10 may include a plurality of functional components 12. The functional components 12 are connected to or in communication with a memory 14. The home appliance system 10 may include a querying module 210, a downloading module 320 and a combining module 230. The online upgrade control method may include:
step S10: querying a server 20 with respect to all functional components 12 to determine whether a software update is available; if yes, step S20: downloading the available software update of the functional component 12 that needs to be updated to the memory 14, and backing up original software of the functional component 12 that needs to be updated to the memory 14; and
step S30: combining all available software version numbers into a single updated version number.

The online upgrade control method in embodiments of the present disclosure may be applied to the home appliance system 10 in embodiments of the present disclosure. The step S10 can be implemented by the querying module 210; the step S20 can be implemented by the processing module 220; and the step S30 can be implemented by the combining module 230. The querying module 210 is configured to query the server 20 about all functional components 12 to determine whether a software update is available. If a software update is available, the downloading module 320 is configured to download the available software update of the functional component 12 that needs to be updated to the memory 14, and back up original software of the functional component 12 that needs to be updated to the memory 14. The combining module 230 is configured to combine all available software version numbers into a single updated version number.

In the online upgrade control method of the home appliance system 10 and the home appliance system 10 in embodiments of the present disclosure, all available software version numbers are combined into a single updated version number, such that it is possible to solve the coupling issue of related software and at the same time, reduce operation complexity for a user since the user does not need to concern how many specific functional component 12 have been or will be updated and upgraded.

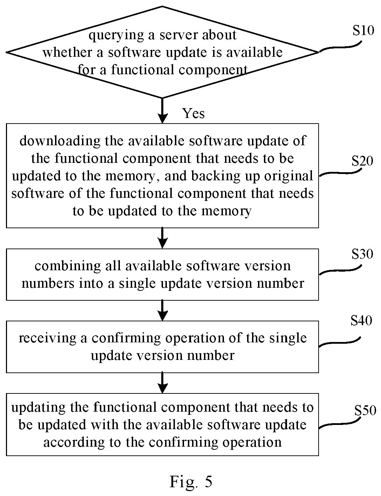

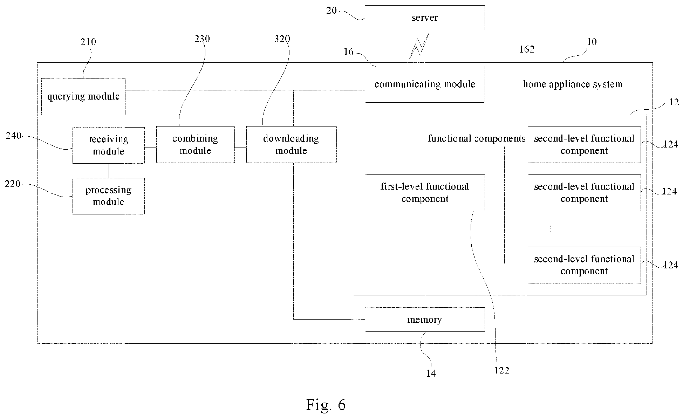

With reference to Fig. 5 and Fig. 6, in some embodiments, the online upgrade control method further includes:
step S40: receiving a confirming operation of the single updated version number; and
step S50: updating the functional component 12 that needs to be updated with the available software update according to the confirming operation.

The online upgrade control method in embodiments of the present disclosure may be applied to the home appliance system 10 in embodiments of the present disclosure. The home appliance system 10 may include a receiving module 240 and a processing module 220. The step S40 can be implemented by the receiving module 240, and the step S50 can be implemented by the processing module 220. The receiving module 240 is configured to receive a confirming operation of the single updated version number. The processing module 220 is configured to update the functional component 12 that needs to be updated with the available software update according to the confirming operation.

As such, it is possible to update the software versions of the functional components 12 that need to be updated at the same time, thus reducing operation complexity for a user.

In specific, "online upgrade" refers to Over-the-air (OTA), i.e., a technology where a terminal device that can access the Internet in a wireless manner accesses a cloud server 20, and automatically downloads and updates the device software version.

The home appliance system 10 may be, for example, an air conditioner system, a refrigerator system, a washing machine system and an electric cooker system. In an example, the air conditioner system may include an indoor unit and an outdoor unit.

It should be noted that the memory 14 in embodiments of the present disclosure may be an external memory. The home appliance system 10 may be provided with a memory interface (not shown in drawings), and the functional component 12 is connected to or in communication with the memory interface. When the memory 14 is installed at the memory interface, the functional component 12 can be connected to or in communication with the memory 14. In some embodiments, the memory 14 interface supports a flash memory, hard disk, floppy disk, etc. It should be pointed out that backing up the original software of the functional component 12 to the memory 14 can be understood as backing up version information of the original software of the functional component 12 to the external memory.

The functional components 12 may include a main control chip of the home appliance, and the main control chip is usually a Micro Controller Unit (MCU) that controls the home appliance system 10 and individual functional components of the home appliance system 10.

When a software update is available for the home appliance system 10, the available software update of the functional component 12 that needs to be updated is downloaded to the memory 14, and the original software of the functional component 12 that needs to be updated is backed up to the memory 14, such that modification of electronically controlled hardware of the home appliance system is reduced, thus it is unnecessary to replace the main control chip with a larger storage space, thereby reducing cost for selecting different main control chip.

The server 20 generally stores the latest upgrade software version of the home appliance system 10, and the home appliance system 10 accesses the server 20 through a wired or wireless network connection. The home appliance system 10 queries the server 20 about whether a software update is available for the functional component 12 through a network file transfer protocol. The network file transfer protocol may include, but not limited to, Network File System (NFS), File Transfer Protocol (FTP), Hyper Text Transfer Protocol (HTTP), and the like.

In this embodiment, it should be noted that the home appliance queries the software versions of individual functional components 12 one by one and reports to the server 20, and subsequently queries the server 20 about whether a software update is available for the functional component 12. In an embodiment, after completion of querying all functional components 12, all available software updates are downloaded to the memory 14 in a unified manner according to all results replied by the server 20. In another embodiment, individual functional components 12 are queried one by one, and the server 20 is queried about whether a software update is available for the individual functional components 12 one by one. Once a software update is available for the functional component 12, the available software update is downloaded to the memory 14 immediately.

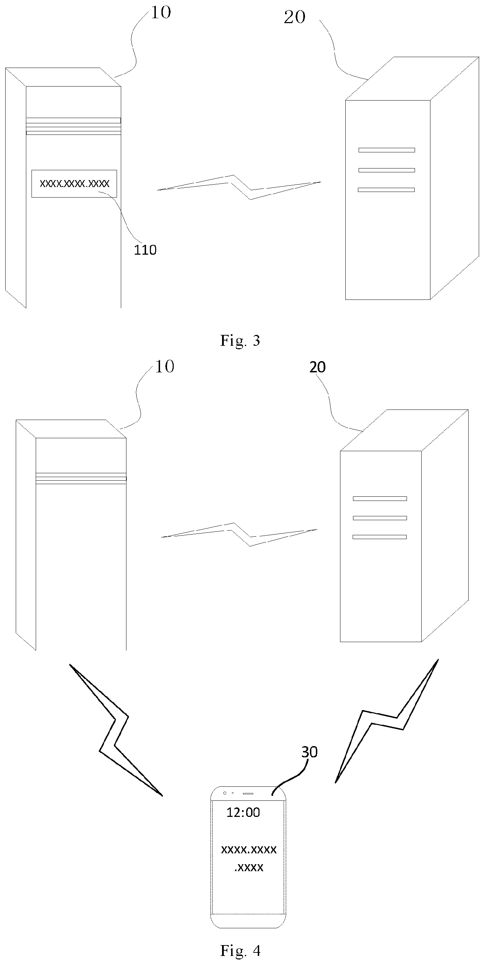

With reference to Fig. 3, in an embodiment, the home appliance system 10 combines all available software version numbers into a single updated version number, and the home appliance system 10 transfers the single updated version number to a touch display screen 110 of the home appliance system 10 in this embodiment. For example as shown in the touch display screen 110, software codes of individual functional components 12 are combined together in a format of "xxxx.xxxx.xxxx". A user may click a confirmation button on the touch display screen 110, and the home appliance system 10 receives a confirming operation of the single updated version number before updates the functional components 12 that need to be updated.

With reference to Fig. 4, in another embodiment, the home appliance system 10 combines all available software version numbers into a single updated version number, and the home appliance system 10 transfers the single updated version number to a terminal 30 where the single updated version number is displayed. For example as shown in the terminal 30, software codes of individual functional components 12 are combined together in a format of "xxxx.xxxx.xxxx". A user may click a confirmation button on the terminal 30, and the terminal 30 sends a triggering signal for a confirming operation to the home appliance system 10 once the confirmation button is triggered on the terminal 30. The home appliance system 10 updates the functional components 12 that need to be updated after receiving the triggering signal.

With reference to Fig. 4, in still another embodiment, the home appliance system 10 sends all available software version numbers to the terminal 30; and the terminal 30, once receiving all available software version numbers, combines them with a corresponding application program (App) into a single updated version number and displays the same. For example as shown in the terminal 30, software codes of individual functional components 12 are combined together in a format of "xxxx.xxxx.xxxx". A user may click a confirmation button on the terminal 30, and the terminal 30 sends a triggering signal for a confirming operation to the home appliance system 10 once the confirmation button is triggered on the terminal 30. The home appliance system 10 updates the functional components 12 that need to be updated after receiving the triggering signal.

It should be noted that when updating the functional components 12 that need to be updated, in an embodiment, all functional components 12 can be updated at the same time; in another embodiment, individual functional components 12 can be updated one by one; in still another embodiment, several functional components 12 can be updated at the same time in advance and then the rest of the functional components 12 can be updated at the same time. There is no limitation to the updating sequence for the functional components 12, which can be set in accordance with actual requirements.

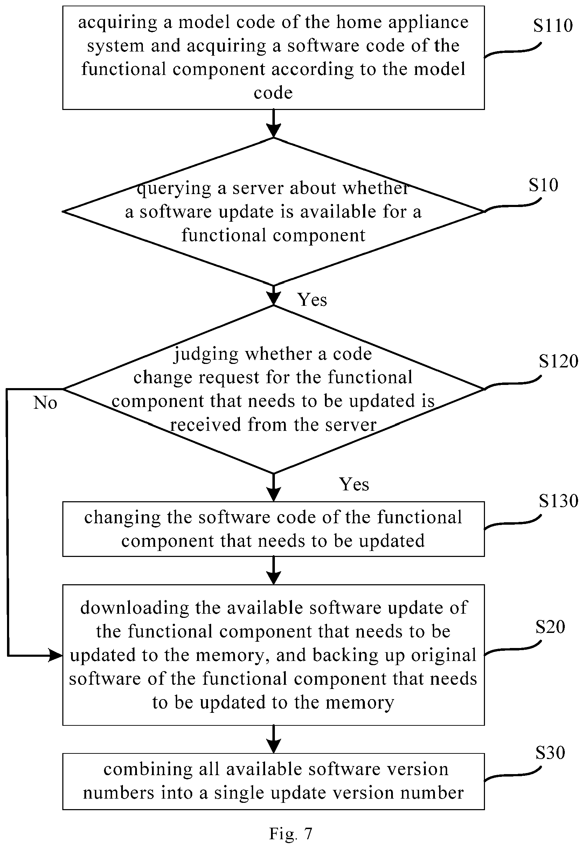

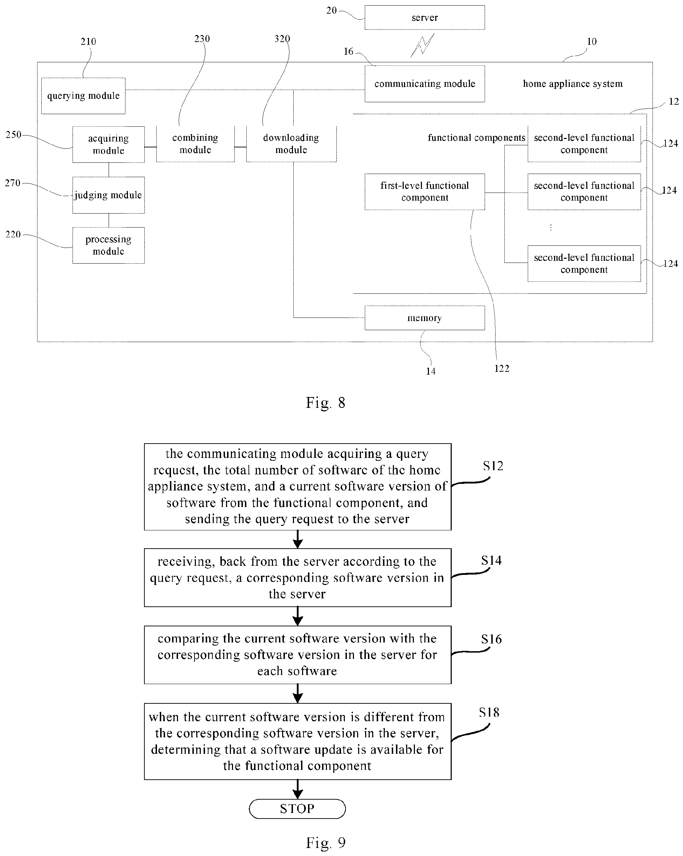

With reference to Fig. 7 and Fig. 8, in some embodiments, the home appliance system 10 includes an acquiring module 250, a judging module 270 and a processing module 220. The online upgrade control method may include:
step S110, acquiring a model code of the home appliance system 10 and acquiring a software code of the functional component 12 according to the model code;
if a software update is available, step S120, judging whether a code change request for the functional component 12 that needs to be updated is received from the server 20; and
if the code change request for the functional component 12 that needs to be updated is received from the server 20, step S130, changing the software code of the functional component 12 that needs to be updated.

The above described online upgrade control method is implemented by the home appliance system 10. The step S110 may be implemented by the acquiring module 250; the step S120 may be implemented by the judging module 270; and the step S130 may be implemented by the processing module 220. The acquiring module 250 is configured to acquire a model code of the home appliance system 10 and acquire a software code of the functional component 12 according to the model code. If a software update is available for the functional component 12, the judging module 270 is configured to judge whether a code change request for the functional component 12 that needs to be updated is received from the server 20. If the code change request for the functional component 12 that needs to be updated is received from the server 20, the processing module 220 is configured to change the software code of the functional component 12 that needs to be updated.

As such, the software code of the functional component 12 is changed when a code change request for the functional component 12 that needs to be updated is received form the server 20, thereby ensuring accuracy of tracking software code of the subsequent functional component 12.

The communicating module 16 may include, but not limited to, a wireless module such as a WiFi module, a Bluetooth, a Zigbee module, a Narrow Band Internet of Things (NB-IoT) module. In specific, in an example, the home appliance system 10 accesses the Internet by connecting to a wireless router through a WiFi module, and then download the available software update from the server 20; in another example, the home appliance system 10 connects to the terminal 30 though a Bluetooth module; and after downloaded to the terminal 30, the available software update is transferred to the home appliance system 10 through the Bluetooth module. It would be appreciated that the wireless router may also be a hotspot of the terminal 30. The terminal 30 may include, but not limited to, a mobile phone, a tablet computer, a personal computer, a notebook computer, a wearable smart device (such as a smart bracelet and a smart helmet), a home appliance and an accessory (such as a remote controller), and the like.

In specific, the acquiring module 250 acquires a model code of the home appliance system 10 and a software code of the functional component 12, before reports the model code of the home appliance system 10 and the software code of the functional component 12 to the server 20. The software code of the functional component 12 is queried under a data structure of the model code corresponding to the home appliance system 10. The software code of the functional component 12 is obtained as a unique identification of the functional component 12, and database of the software codes is directly in communication with database of a production management system. Any design change or manufacturing change of the software code of the functional component 12 initiated by an engineer in the production management system will be synchronized to online upgrade database in the server 20. In other words, an engineer can check an item indicating a design change or manufacturing change of a corresponding software code at a backstage of the database in the server 20. For example, several models of the home appliance system originally share one software code; however due to a design flaw, only one certain model needs an independent new software code, i.e., a separate code. Therefore, it is necessary to check a change of the corresponding software code at the backstage of the database in the server 20.

Furthermore, after receiving an instruction indicating the design change or manufacturing change of the corresponding software code, the server 20 will send a code change request to the functional component 12 that needs to be updated. When receiving the code change request for the functional component 12 that needs to be updated from the server 20, the home appliance system 10 changes the software code of the functional component 12. As such, it is possible to improve accuracy of tracking the functional component 12, allowing synchronization between the online upgrade database and the database of the manufacturing management system, thus a material numbering in the manufacturing system can be used as the unique identification of the software, thereby facilitating tracking the product software version.

It should be noted that changing the software code of the functional component 12 refers to changing a code figure of the software code while the software version number of the functional component 12 is maintained. For example, in an example, an engineer checks a design change of the corresponding software code at the backstage of the database in the server 20, to change the seventeen-digit code figures of the software code corresponding to the functional component 12, where the four-digit code figures representing the software version number of the functional component 12 will not be changed. In other words, even if a change occurs for the functional component 12 of the functional component 12, the software version number of the functional component 12 will not be changed.

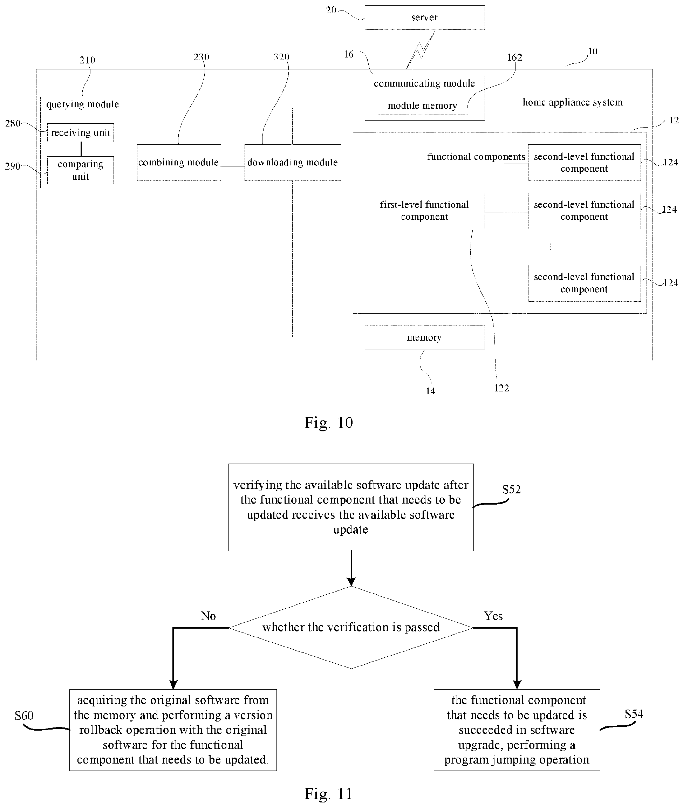

With reference to Fig. 9 and Fig. 10, in some embodiments, the home appliance system 10 includes a communicating module 16, and the querying module 210 includes a receiving unit 280 and a comparing unit 290. The communicating module 16 includes a module memory 162, and the step S10 includes:
step S12, the communicating module 16 acquiring a query request, the total number of software of the home appliance system 10, and a current software version of software from the functional component 12, and sending the query request to the server 20;
step S14, receiving, back from the server 20 according to the query request, a corresponding software version in the server 20;
step S16, comparing the current software version with the corresponding software version in the server 20 for each software; and
step S18, when the current software version is different from the corresponding software version in the server 20, determining that a software update is available for the functional component 12;
step S20 includes:
   downloading the available software update to the module memory 162 first, and then storing the available software update from the module memory 162 to the memory 14.

The above described online upgrade control method may be implemented by the home appliance system 10 in embodiments of the present disclosure. The step S12 may be implemented by the communicating module 16; the step S14 may be implemented by the receiving unit 280; the step S16 may be implemented by the comparing unit 290; and the step S18 may be implemented by the processing module 220. The communicating module 16 is configured to acquire a query request, the total number of software of the home appliance system 10, and a current software version of software from the functional component 12, and send the query request to the server 20. The receiving unit 280 is configured to receive, back from the server 20 according to the query request, a corresponding software version in the server 20. The comparing unit 290 is configured to compare the current software version with the corresponding software version in the server 20 for each software. When the current software version is different from the corresponding software version in the server 20, the processing module 220 is configured to determine that a software update is available for the functional component 12. The processing module 220 is further used to download the available software update to the module memory 162 first; and then store the available software update from the module memory 162 to the memory 14.

As such, in embodiments of the present disclosure, the home appliance system 10 may utilize the communicating module 16 to download and store the available software update in a backup area of the module memory 162 first, allowing full use of a storage space of the module memory 162 to achieve rapid downloading, reducing network accessing frequencies during downloading the available software update, and shortening a time period of downloading, thereby improving reliability of the available software upgrade, and thus achieving rapid updating of the functional component 12.

The software versions are distinguished by numbering, which can be a figure, a letter, or a combination thereof. If the software numberings are same, the software versions are considered the same. On the contrary, if the software numberings are different, the software versions are considered to be different. It should be noted that when the current software version is the same as the corresponding software version in the server 20, it is determined that no software update is available for the functional component 12.

In an embodiment, the communicating module 16 may download all the available software updates to the module memory 162 first; and then store all the available software updates from the module memory 162 to the memory 14. After all the available software updates are downloaded and stored in the module memory 162, the communicating module 16 may notify the functional component 12; and the functional component 12 may in turn store the software data in the memory 14 frame by frame. In this process, the home appliance system 10 does not need to access the network, thereby solving the problem of long time period for downloading software and high rate of network occupancy.

In another embodiment, the communicating module 16 may download one available software update to the module memory 162 first; the communicating module 16 may notify the functional component 12; and the functional component 12 may in turn store the software data of this available software update to the memory 14. After completion of storing one available software update to the memory 14, another available software update may be downloaded to the module memory 162 first; the communicating module 16 then may notify the functional component 12; and the functional component 12 may store the software data of this available software update to the memory 14. In a similar fashion, all available software updates are stored to the memory 14.

In certain embodiments, the first-level functional component 122 is connected to the second-level functional component 124, the communicating module 16, and the memory 14. The online upgrade control method may include:
the communicating module 16 acquiring a query request, the total number of software of the home appliance system 10, and a current software version of software from the first-level functional component 122; and when the second-level functional component 124 needs to be updated, the first-level functional component 122 acquiring the available software update from the memory 14 and distributing the available software update to the second-level functional component 124 that needs to be updated.

The above described online upgrade control method may be implemented by the home appliance system 10 in embodiments of the present disclosure. The communicating module 16 acquires a query request, the total number of software of the home appliance system 10, and a current software version of software from the first-level functional component 122; and when the second-level functional component 124 needs to be updated, the first-level functional component 122 acquires the available software update from the memory 14 and distributes the available software update to the second-level functional component 124 that needs to be updated.

As such, by the memory 14, the available software update may be stored and the original software may be backed up for all the functional components 12 of the home appliance system 10. When the second-level functional component 124 needs to be updated, the first-level functional component 122 distributes the available software update, thereby solving the problem where the communicating module 16 can only upgrade one functional component 12 that is directly connected to or in communication with the communication module 16.

In specific, the communicating module 16 and the first-level functional component 122 may be directly connected through a communication line, and the first-level functional component 122 and the second-level functional component 124 may be directly connected through a communication line. In the step S20, backing up the original software of the functional component 12 to the memory 14 may refer to that the first-level functional component 122 backs up the original software of the first-level functional component 122 itself to the memory 14; the first-level functional component 122 backs up the original software of the second-level functional component 124 to the memory 14; or the first-level functional component 122 backs up the original software of the first-level functional component 122 itself and the original software of the second-level functional component 124 to the memory 14.

It should be noted that the first-level functional component 122 may be a first-level electronic control board of the entire home appliance system 10, where the first-level electronic control board is provided with a main control chip and the memory 14; while the second-level functional component 124 may be a second-level electronic control board of the home appliance system 10, where the second-level electronic control board is provided with a plurality of main control chips with different functions. The first-level functional component 122 and the plurality of second-level functional components 124 are related together to realize a coordinated control of different functions of the home appliance system 10. For example, in an air conditioner, the first-level functional component 122 may include a main control chip of the entire air conditioner control system; while the second-level functional component 124 may include an electronic control board of an indoor unit, a display panel, an electronic control board of an outdoor unit, a sensor module, and the like of the air conditioner system. The first-level functional component 122 connecting to the second-level functional components 124 may realize the coordinated control among the indoor unit, the outdoor unit, and the sensor of the air conditioner. The software of the second-level functional component 124 may be main control software of for example an indoor unit main control program, an outdoor unit main control program, a display board program, and a sensor module, where each software has an independent software version numbering. The second-level functional component 124 may further include a key operating parameter for the program, such as an E-party parameter for an indoor unit and an outdoor unit.

In an example, the first-level functional component 122 may be provided at a display panel. The display panel is generally provided at an indoor unit.

In certain embodiments, the step S50 may include: controlling the functional component 12 that needs to be updated in a working state to enter an idle state, and updating the functional component 12 that needs to be updated in the idle state with the available software update.

The above described online upgrade control method may be implemented by the home appliance system 10. The processing module 220 is configured to control the functional component 12 that needs to be updated in a working state to enter an idle state, and update the functional component 12 that needs to be updated in the idle state with the available software update.

As such, it is possible to ensure efficiency and success rate of updating and upgrading the functional component 12 that needs to be updated.

In specific, as an error will occur during upgrade of the functional component 12 in the working state, in this embodiment, the functional component 12 that needs to be updated in the working state is thus controlled to enter the idle state, which can improve efficiency and accuracy of the upgrade, thereby avoiding the error from occurring.

It should be noted that when several functional components 12 need to be upgraded, where some of them are in the working state while others are in the idle state, in an embodiment, the functional components 12 in the idle state may be controlled to be upgraded first, and the rest of functional components 12 that need to be updated in the working state may be then upgraded after being controlled to enter the idle state. In another embodiment, the functional components 12 that need to be updated in the working state may be controlled to enter the idle state first; that is to say, at this time, all the functional components 12 that need to be updated are in the idle state, which are then updated in a unified manner.

In certain embodiments, the step S50 may include: controlling the home appliance system 10 to restart; and updating the functional component 12 that needs to be updated after the restart. In specific, a user may control the home appliance system 10 to restart, and the functional component 12 that needs to be updated is updated by the home appliance system 10 after the restart.

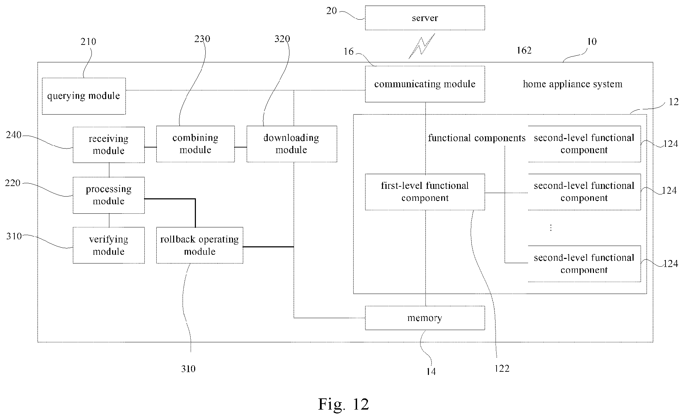

With reference to Fig. 11 and Fig. 12, in some embodiments, the step S50 may include:
at step S52, verifying the available software update after the functional component 12 that needs to be updated receives the available software update; and when the verification is passed, step S54, the functional component 12 that needs to be updated is succeeded in software upgrade, performing a program jumping operation,

The online upgrade control method may include:
when the verification is failed, at step S60, acquiring the original software from the memory 14 and performing a version rollback operation with the original software for the functional component 12 that needs to be updated.

The above described online upgrade control method may be implemented by the home appliance system 10. The home appliance system 10 may include a verifying module 310. The step S52 may be implemented by the verifying module 310; the step S54 may be implemented by the processing module 220; and the step S60 may be implemented by the version rollback module 260. The verifying module 310 is configured to verify the available software update after the functional component 12 that needs to be updated receives the available software update. When the verification is passed, the functional component 12 that needs to be updated is succeeded in software upgrade, the processing module 220 is configured to perform a program jumping operation for the home appliance system 10. When the verification is failed, the version rollback module 260 is configured to acquire the original software from the memory 14 and perform a version rollback operation with the original software for the functional component 12 that needs to be updated.

As such, the home appliance system 10 may ensure that software upgrade may be rolled back in the process of the software upgrade, such that the original software can still be used for operation after failure of upgrade, thereby improving reliability of upgrade.

When the functional component 12 that needs to be updated is the first-level functional component 122, the first-level functional component 122 verifies the available software update after acquiring the available software update from the memory 14; when the verification is passed, the first-level functional component 122 is succeeded in software upgrade, and performs a program jumping operation. When the verification is failed, the first-level functional component 122 acquires the original software from the memory 14, and performs a version rollback operation with the original software.

When the functional component 12 that needs to be updated is the second-level functional component 124, the second-level functional component 124 verifies the available software update after receiving the available software update distributed from the first-level functional component 122; when the verification is passed, the second-level functional component 124 is succeeded in software upgrade, and performs a program jumping operation. When the verification is failed, the second-level functional component 124 notifies the first-level functional component 122 to acquire the original software from the memory 14, and performs a version rollback operation with the original software for the second-level functional component 124.

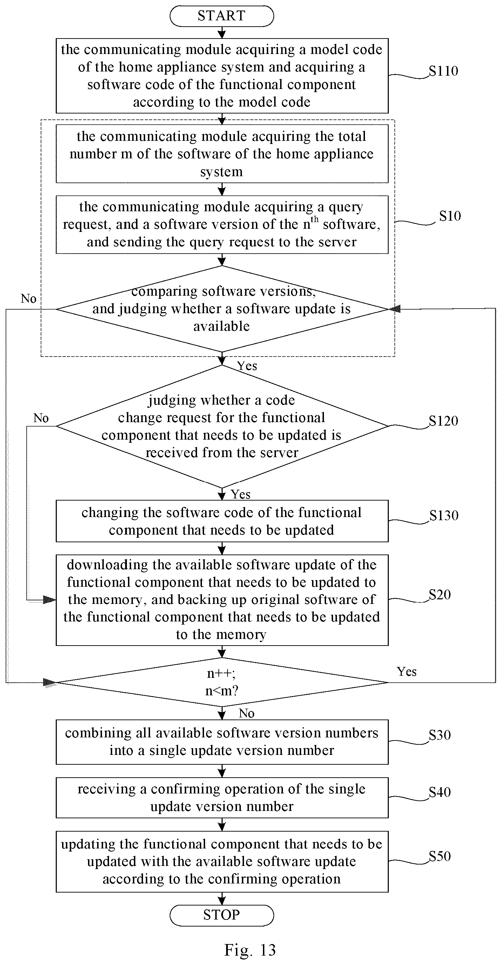

In an example, with reference to Fig. 13, the total number of the software of the home appliance system 10 is m; the communicating module 16 acquires a model code of the home appliance system 10 and acquires a software code of the functional component 12 according to the model code; the communicating module 16 queries a current software version of the n^{th} software, and reports to the server 20. In accordance with version comparison, it is determined whether a software update is available for the n^{th} software; if yes, it is judged whether a code change request for the functional component 12 that needs to be updated is received from the server 20. If the code change request for the functional component 12 that needs to be updated is received from the server 20, the software code of the functional component 12 is changed, before the available software update is downloaded to the memory 14 and the original software of the n^{th} software is backed up to the memory 14. If the code change request for the functional component 12 that needs to be updated is not received from the server 20, the available software update is directly downloaded to the memory 14 and the original software of the n^{th} software is backed up to the memory 14. This is cycled until all software of the home appliance system 10 is queried, before all available software version numbers are combined into a single updated version number. Afterwards, when a confirming operation of the single updated version number is received, the available software updates are acquired from the memory 14 for updating the functional components 12. If the upgrade succeeds, a program jumping operation is performed; while if the upgrade fails, the backup software is retrieved from the memory 14 to the functional component 12, and a version rollback operation is performed for the functional component 12 that needs to be updated.

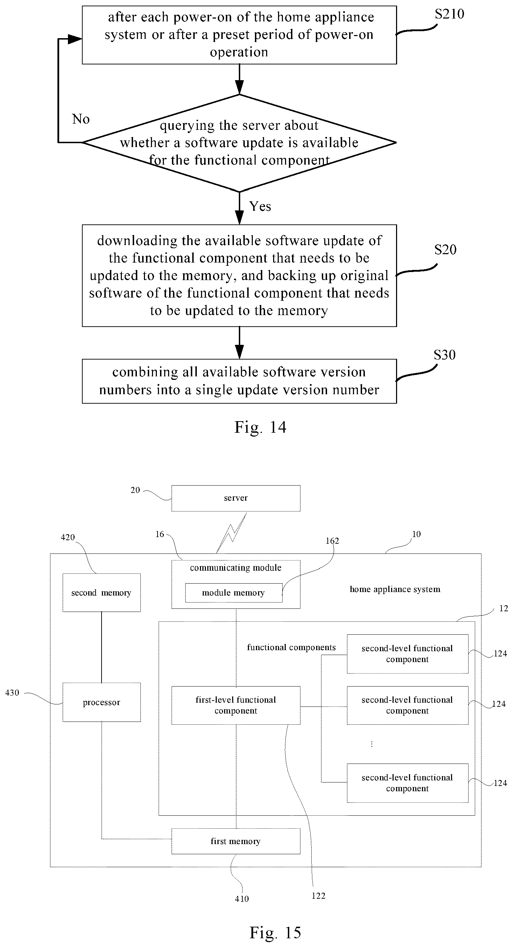

With reference to Fig. 14, in some embodiments, the step S 10 may include:
at the step S210, querying the server 20 about whether a software update is available for the functional component 12 after each power-on of the home appliance system 10 or after a preset period of power-on operation.

The above described online upgrade control method may be implemented by the home appliance system. The step S210 is implemented by the home appliance system 10. After each power-on of the home appliance system 10 or after a preset period of power-on operation, the home appliance system 10 is configured to query the server 20 about whether a software update is available for the functional component 12. As such, the upgrade query process is periodically initiated by the home appliance system 10, such that it is possible to disperse concurrent requests from the user as much as possible as compared with regular initiations by the server 20, thus reducing combined peak values of the server 20.

With reference to Fig. 15, the present disclosure further provides in embodiments a home appliance system 10, including a plurality of functional components 12, a first memory 410, a processor 430, and a second memory 420 having stored therein one or more programs that is(are) configure to, when executed by the processor 430, perform an online upgrade control method in any of the above-described embodiments.

The home appliance system 10 in embodiments of the present disclosure, all available software version numbers are combined into a single updated version number, such that it is possible to solve the coupling problem of related software and reduce operation complexity for a user as it is unnecessary to care about how many functional component updates are upgraded.

In certain embodiments, the processor 430 and the second memory 420 may be provided in a first-level electronic control board of the home appliance system 100. The processor 430 may be used as a main control chip. The second memory 420 may be understood as a built-in memory of the home appliance system 100.

It should be noted that in the present embodiment the first memory 410 may be understood as the memory 14 in any of the above-described embodiments. The first memory 410 may also be an external memory. In the present embodiment, version information of the original software of the functional component 12 that needs to be updated is backed up to the external memory.

Reference throughout this specification to "certain embodiments", "an embodiment", "some embodiments", "illustrative embodiments", "an example", "a specific example" or "some examples" means that a particular feature, structure, material, or characteristic described in connection with the embodiment or example is included in at least one embodiment or example of the present disclosure. Thus, the illustrative expressions of the above phrases throughout this specification are not necessarily referring to the same embodiment or example of the present disclosure. Furthermore, the particular features, structures, materials, or characteristics may be combined in any suitable manner in one or more embodiments or examples.

Any procedure or method described in the flow charts or described in any other way herein may be understood to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions. This should be understood by those skilled in the art to which embodiments of the present disclosure belong.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

Although explanatory embodiments have been shown and described, it would be appreciated by those skilled in the art that the above embodiments cannot be construed to limit the present disclosure, and changes, alternatives, and modifications can be made in the embodiments in the scope of the present disclosure.

## Claims

1. An online upgrade control method for a home appliance system, wherein the home appliance system comprises a plurality of functional components and the home appliance system is in communication with a memory, the online upgrade control method comprising:
querying a server with respect to all functional components to determine whether a software update is available;
if yes, downloading the available software update of the functional component that needs to be updated to the memory, and backing up original software of the functional component that needs to be updated to the memory; and
combining all available software version numbers into a single updated version number.

2. The online upgrade control method of claim 1, wherein the online upgrade control method further comprises:
receiving a confirming operation of the single updated version number; and
updating the functional component that needs to be updated with the available software update according to the confirming operation.

3. The online upgrade control method of claim 1, wherein the online upgrade control method further comprises:
acquiring a model code of the home appliance system and acquiring a software code of the functional component according to the model code;
if a software update is available, judging whether a code change request for the functional component that needs to be updated is received from the server; and
if the code change request for the functional component that needs to be updated is received from the server, changing the software code of the functional component that needs to be updated.

4. The online upgrade control method of claim 1, wherein the home appliance system comprises a communicating module and the communicating module comprises a module memory, wherein querying the server with respect to all functional components to determine whether the software update is available comprises:
the communicating module acquiring a query request, from the functional components, a total number of software of the home appliance system, and a current software version of software, and sending the query request to the server;
receiving, back from the server according to the query request, a corresponding software version in the server;
comparing the current software version with the corresponding software version in the server for each software; and
when the current software version is different from the corresponding software version in the server, determining that a software update is available;
wherein downloading the available software update of the functional component that needs to be updated to the memory comprises:
downloading the available software update to the module memory, and storing the available software update from the module memory to the memory.

5. The online upgrade control method of claim 4, wherein the plurality of functional components comprises a first-level functional component and a second-level functional component, wherein the first-level functional component is connected to the second-level functional component, the communicating module, and the memory, wherein the online upgrade control method comprises:
the communicating module acquiring a query request, the total number of software of the home appliance system, and a current software version of software from the first-level functional component; and
when the second-level functional component needs to be updated, the first-level functional component acquiring the available software update from the memory and distributing the available software update to the second-level functional component that needs to be updated.

6. The online upgrade control method of claim 2, wherein the updating the functional component that needs to be updated with the available software update according to the confirming operation comprises:
controlling the functional component that needs to be updated in a working state to enter an idle state, and updating the functional component that needs to be updated in the idle state with the available software update; or
controlling the home appliance system to restart, and updating the functional component that needs to be updated after the restart.

7. The online upgrade control method of claim 2, wherein the updating the functional component that needs to be updated with the available software update according to the confirming operation comprises:
verifying the available software update after the functional component that needs to be updated receives the available software update; and
when the verification is passed, the functional component that needs to be updated is succeeded in software upgrade, performing a program jumping operation;
wherein the online upgrade control method comprises:
when the verification is failed, acquiring the original software from the memory and performing a version rollback operation with the original software for the functional component that needs to be updated.

8. The online upgrade control method of claim 1, wherein the querying a server with respect to all functional components to determine whether a software update is available further comprises:
querying the server with respect to all functional components to determine whether the software update is available after each power-on of the home appliance system or after a preset period of power-on operation.

9. A home appliance system, comprising a plurality of functional components, a querying module, a downloading module and a combining module, wherein the home appliance system is in communication with a memory, wherein:
the querying module is configured to query a server with respect to all functional components to determine whether a software update is available;
if the software update is available, the downloading module is configured to download the available software update of the functional component that needs to be updated to the memory, and back up original software of the functional component that needs to be updated to the memory; and
the combining module is configured to combine all available software version numbers into a single updated version number.

10. The home appliance system of claim 9, wherein the home appliance system further comprises a receiving module and a processing module,
the receiving module is configured to receive a confirming operation of the single updated version number; and
the processing module is configured to update the functional component that needs to be updated with the available software update according to the confirming operation.

11. The home appliance system of claim 9, wherein the home appliance system further comprises an acquiring module, a judging module and a processing module,
the acquiring module is configured to acquire a model code of the home appliance system and acquire a software code of the functional component according to the model code,
the judging module is configured to judge whether a code change request for the functional component that needs to be updated is received from the server if the software update is available; and
the processing module is configured to change the software code of the functional component that needs to be updated if the code change request for the functional component that needs to be updated is received from the server.

12. The home appliance system of claim 9, wherein the home appliance system further comprises a communicating module, the querying module comprises a receiving unit and a comparing unit, the communicating module comprises a module memory,
the communicating module is configured to acquire a query request, the total number of software of the home appliance system, and a current software version of software from the functional component, and send the query request to the server;
the receiving unit is configured to receive, back from the server according to the query request, a corresponding software version in the server;
the comparing unit is configured to compare the current software version with the corresponding software version in the server for each software;
when the current software version is different from the corresponding software version in the server, the comparing unit is configured to determine that a software update is available for the functional component; and
the downloading module is further configured to download the available software update to the module memory; and store the available software update from the module memory to the memory.

13. The home appliance system of claim 12, wherein the plurality of functional components comprises a first-level functional component and a second-level functional component, wherein the first-level functional component is connected to the second-level functional component, the communicating module, and the memory,
the communicating module is configured to acquire a query request, the total number of software of the home appliance system, and a current software version of software from the first-level functional component,
when the second-level functional component needs to be updated, the first-level functional component is configured to acquire the available software update from the memory and distribute the available software update to the second-level functional component that needs to be updated.

14. The home appliance system of claim 10, wherein the processing module is configured to:
control the functional component that needs to be updated in a working state to enter an idle state, and update the functional component that needs to be updated in the idle state with the available software update; or
control the home appliance system to restart, and update the functional component that needs to be updated after the restart.

15. The home appliance system of claim 10, wherein the home appliance system further comprises a verifying module and a rollback operating module,
the verifying module is configured to verify the available software update after the functional component that needs to be updated receives the available software update, and
when the verification is passed, the functional component that needs to be updated is succeeded in software upgrade, the processing module is configured to perform a program jumping operation for the home appliance system; and
when the verification is failed, the rollback operating module is configured to acquire the original software from the memory and perform a version rollback operation with the original software for the functional component that needs to be updated.

16. The home appliance system of claim 9, wherein the querying module is configured to query the server about all functional components to determine whether the software update is available after each power-on of the home appliance system or after a preset period of power-on operation.

17. A home appliance system, comprising:
a plurality of functional components,
a first memory,
a processor, and
a second memory having stored therein one or more programs configured to, when executed by the processor, perform an online upgrade control method of any one of claims 1 to 8.
